(19) **Europäisches Patentamt**

**European Patent Office**

**Office européen des brevets**

(11) Veröffentlichungsnummer: **0 206 066 B1**

(12) # EUROPÄISCHE PATENTSCHRIFT

(45) Veröffentlichungstag der Patentschrift: **17.03.93**

(21) Anmeldenummer: **86107804.6**

(22) Anmeldetag: **07.06.86**

(51) Int. Cl.⁵: **F23C 11/02**, F22B 31/00

Die Akte enthält technische Angaben, die nach dem Eingang der Anmeldung eingereicht wurden und die nicht in dieser Patentschrift enthalten sind.

(54) **Verbrennungsvorrichtung mit zirkulierender Wirbelschicht.**

(30) Priorität: **12.06.85 US 744118**

(43) Veröffentlichungstag der Anmeldung: **30.12.86 Patentblatt 86/52**

(45) Bekanntmachung des Hinweises auf die Patenterteilung: **17.03.93 Patentblatt 93/11**

(84) Benannte Vertragsstaaten: **AT BE CH DE FR GB IT LI NL SE**

(56) Entgegenhaltungen:
**EP-A- 0 046 406**
**EP-A- 0 068 301**
**EP-A- 0 092 622**
**FR-A- 2 209 074**

(73) Patentinhaber: **METALLGESELLSCHAFT AG**
**Reuterweg 14 Postfach 3724**
**W-6000 Frankfurt/M.1(DE)**

(72) Erfinder: **Beisswenger, Hans**
**65 Akers Avenue**
**Montvale New Jersey 07645(US)**
Erfinder: **Frank, Wolfgang Peter**
**Egerlandstrasse 6**
**W-6236 Eschborn 2(DE)**
Erfinder: **Wechsler, Alexander Teodor**
**4455 Douglas Avenue 4 C**
**Riverdale New York 10471(US)**

(74) Vertreter: **Rieger, Harald, Dr.**
**Reuterweg 14**
**W-6000 Frankfurt am Main (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3. 10/3.5x/3.0. 1)

**Beschreibung**

Die Erfindung betrifft eine Verbrennungsvorrichtung mit einer aus Wirbelschichtreaktor (10), Feststoffabscheider (20) und Rückführleitung (28) gebildeten zirkulierenden Wirbelschicht, die neben der Fluidisierungsgaszuführung (16) wenigstens eine Zuführung für sauerstoffhaltiges Sekundärgas (17) aufweist, ferner mit mindestens einem mit Kühlelementen (60) ausgestatteten Wirbelschichtkühler (34), der über eine Leitung (32) mit dem Feststoffabscheider (20) oder der Rückführleitung (28) in Verbindung steht, sowie mit einer Feststoffrückführung vom Wirbelschichtkühler (34) in den Wirbelschichtreaktor (10). Eine derartige Vorrichtung ist in DE-A-2 624 302 offenbart.

Mit zirkulierenden Wirbelschichten arbeitende Verfahren und Vorrichtungen, insbesondere auch zur Verbrennung kohlenstoffhaltiger Materialien, haben sich als äußerst vorteilhaft erwiesen. Sie sind gegenüber solchen, die mit sogenannten klassischen oder konventionellen Wirbelschichten betrieben werden, aus vielerlei Gründen überlegen.

Speziell für Verbrennungsprozesse ist das Basisverfahren in der DE-AS 25 39 546 (entsprechend US-PS 4 165 717) beschrieben. Es sieht vor, die Verbrennung zweistufig vorzunehmen und die Verbrennungswärme mit Hilfe von Kühlflächen, die oberhalb der Sekundärgaszufuhr im Wirbelschichtreaktor angeordnet sind, abzuführen. Der besondere Vorzug des Verfahrens besteht darin, daß man den Verbrennungsprozeß in technisch einfacher Weise an den Leistungsbedarf anpassen kann, indem im oberen Reaktorraum die Suspensionsdichte und damit der Wärmeübergang auf die Kühlflächen geregelt wird. Sofern vergleichsweise aschereiche Brennstoffe verbrannt werden sollen, sieht eine Ausgestaltung dieses Verfahrens vor, die Asche vor ihrer Deponie oder sonstigen Verwertung in einem Wirbelschichtkühler unter Aufheizung von Verbrennungsluft zu kühlen.

Bei dem Verbrennungsprozeß mit zirkulierender Wirbelschicht gemäß DE-OS 26 24 302 (entsprechend US-PS 4 111 158) ist vorgesehen, die Verbrennungswärme zum Teil oder insgesamt in einem dem Wirbelschichtreaktor nachgeschalteten Wirbelschichtkühler zu entnehmen und gekühlten Feststoff zur Konstanthaltung der Temperatur in den Wirbelschichtreaktor zurückzuführen. Die Anpassung an den Leistungsbedarf erfolgt hierbei durch Vergrößerung oder Verringerung des über den Wirbelschichtkühler und danach wieder in den Wirbelschichtreaktor geführten Feststoffstromes.

Aufgabe der Erfindung ist es, eine Verbrennungsvorrichtung gemäß dem Oberbegriff des Anspruchs 1 so weiterzubilden, daß diese einen hohen Wirkungsgrad aufweist und eine Anpassung an den jeweiligen Leistungsbedarf mit einem Minimum an Verzögerung gestattet.

Die Aufgabe wird gelöst, indem die Verbrennungsvorrichtung der eingangs genannten Art entsprechend der Erfindung derart ausgestaltet wird, daß der Wirbelschichtkühler (34) oberhalb der Fluidisierungsgaszuführung (16) des Wirbelschichtreaktors (10) angeordnet ist, mit dem Wirbelschichtreaktor (10) eine gemeinsame Wand (40) besitzt, die gekühlt ist und eine mindestens Durchtrittsöffnung (56) für gekühlten Feststoff in den Wirbelschichtreaktor (10) aufweist.

Das in der erfindungsgemäßen Vorrichtung angewendete Prinzip der zirkulierenden Wirbelschicht zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche:

$$0,1 \quad \leq \quad 3/4 \cdot F_r^2 \cdot \frac{\rho_g}{\rho_k - \rho_g} \quad \leq \quad 10,$$

bzw.

$$0,01 \leq Ar \leq 100,$$

wobei

2

$$Ar = \frac{d_k{}^3 \cdot \rho_g (\rho_k - \rho_g)}{\rho_g \cdot \nu^2} \quad \text{und}$$

$$F_r{}^2 = \frac{u^2}{g \cdot d_k}$$

sind.

Es bedeuten:

u       die relative Gasgeschwindigkeit in m/s

Ar      die Archimedeszahl

$F_r$      Froude-Zahl

$\rho g$      die Dichte des Gases in kg/m$^3$

$\rho k$      die Dichte des Feststoffteilchens in kg/m$^3$

$d_k$      den Durchmesser des kugelförmigen Teilchens in m

$\nu$       die kinematische Zähigkeit in m$^2$/s

g       die Gravitationskonstante in m/s$^2$

Die in der erfindungsgemäßen Vorrichtung durch Verbrennung freigesetzte thermische Energie kann teilweise mittels im Wirbelschichtreaktor oberhalb der Sekundärgaszuführung installierter Kühlflächen abgeführt werden. Um eine gute Quervermischung insbesondere im Eintragsbereich des Brennstoffes zu erzielen, sollte der unterhalb der Sekundärgaszuführung befindliche Reaktorraum möglichst frei von Einbauten sein. Eine Wandkühlung in diesem Bereich kann vorgenommen werden.

Es ist jedoch auch möglich, auf eine Kühlung im Wirbelschichtreaktor zu verzichten und die gesamte durch den Verbrennungsprozeß freigesetzte thermische Energie durch den Wirbelschichtkühler abzuführen. Die Wahl der Form der Kühlung wird von den jeweiligen Gegebenheiten bestimmt bzw. sich aus ihnen ergeben.

Beim Betrieb der erfindungsgemäßen Vorrichtung wird der mit den Abgasen aus dem Wirbelschichtreaktor ausgetragene Feststoff im Feststoffabscheider vom Gas getrennt und mindestens teilweise in den Wirbelschichtkühler eingetragen. Vom Wirbelschichtkühler gelangt der überwiegende Teil des Feststoffes nach Entzug von fühlbarer Wärme vermittels der gemeinsamen mit einer Durchtrittsöffnung versehenen Trennwand in den Wirbelschichtreaktor zurück. Die Trennwand kann eine oder mehrere Durchtrittsöffnungen aufweisen, deren Fläche so groß ist, daß die Feststoff- und Gasströme auch bei Vollastbetrieb in den Wirbelschichtreaktor eintreten können. Die Durchtrittsöffnungen können auf der Unterseite auch durch eine wehrähnliche Ausgestaltung gebildet sein.

Entsprechend einer bevorzugten Ausgestaltung der Erfindung ist der Wirbelschichtkühler zwischen Fluidisierungsgas- und Sekundärgaszuführung des Wirbelschichtreaktors angeordnet. Sein Gehäuse kann aus einem entsprechend geformten Wandungsteil des Wirbelschichtreaktors bestehen.

Die Durchtrittsöffnung(en) sollte(n) sich zweckmäßigerweise auf einem Niveau befinden, das gleich oder über dem Niveau der Brennstoffzufuhr liegt. Sie bestimmen zudem die Betthöhe im Wirbelschichtkühler.

Der Wirbelschichtkühler weist mindestens ein Kühlelement auf, das beispielsweise aus einem Bündel von Wärmetauscherrohren gebildet sein kann. Die Kühlelemente sollten möglichst vollständig in die Wirbelschicht eintauchen. Darüberhinaus können auch die Wandungen des Wirbelschichtkühlers aus Kühlelementen, z.B. Rohrwänden, gebildet sein.

Als Wärmetauschermedien kommen insbesondere Wasser, Luft, Dampf und Salzschmelzen in Betracht. Dabei kann die verwendete Luft beispielsweise als Verbrennungsluft eingesetzt werden.

Der Wirbelschichtkühler wird mit Fluidisierungsgas vergleichsweise geringer Geschwindigkeit angeströmt, so daß ein Wirbelschichtzustand entsprechend der konventionellen Wirbelschicht herrscht. Das Fluidisierungsgas des Wirbelschichtkühlers steht unter einem Druck der so hoch ist, daß auch noch nach Durchgang durch die Wirbelschicht ein Überdruck gegenüber dem Druck im Wirbelschichtreaktor an der Durchtrittsöffnung resultiert. Dadurch ist sichergestellt, daß ein ordnungsgemäßer Fluß von Feststoff und Gas in den Wirbelschichtreaktor stattfindet. Überschüssiger Feststoff, der etwa dem mit dem Brennstoff aufgegebenen Inertmaterial (z.B. Asche und Entschwefelungsmittel) entspricht, wird aus dem Zirkulationssystem ausgeschleust.

Die Aufteilung des über Wirbelschichtreaktor, Feststoffabscheider, Rückführleitung bzw. Wirbelschichtkühler geführten Feststoffes wird im wesentlichen durch die Temperatur des den Feststoffabscheider verlassenden Abgases und/oder durch die Austrittstemperatur des Wärmetauschermediums bestimmt. Bei Anstieg der Temperatur des Abgases wird ein größerer Teil des Feststoffes über den Wirbelschichtkühler geführt. Bei Abfall dieser Temperatur wird der entsprechende Feststoffstrom verringert.

Die Anordnung des Wirbelschichtreaktors und des mit diesem eine bauliche Einheit bildenden Wirbelschichtkühlers ermöglicht die unabhängige Regelung verschiedener Wärmeleistungen, z.B. zur Verdampfung, Überhitzung, Zwischenüberhitzung, mit einem Minimum an Verzögerung.

Die vorgenannte unabhängige Regelung läßt sich in besonders einfacher Weise realisieren, wenn entsprechend einer weiteren vorteilhaften Ausgestaltung der Erfindung der Wirbelschichtkühler aus mehreren mit Kühlelementen ausgestatteten Einheiten besteht, die jeweils eine gemeinsame Wand mit dem Wirbelschichtreaktor sowie separate Feststoffversorgungsleitungen aufweisen. Dabei sollten die einzelnen Einheiten Kühlflächen lediglich nur zur Verdampfung, zur Überhitzung oder Zwischenüberhitzung besitzen.

Schließlich sieht eine vorteilhafte Weiterbildung der Erfindung vor, einzelne Einheiten mit Eintragseinrichtungen für Brennstoff oder Entschwefelungsmittel auszustatten. Hierdurch ist insbesondere eine Möglichkeit zur Feinregulierung der Temperatur des den Wirbelschichtkühler verlassenden Feststoffes gegeben.

Die erfindungsgemäße Vorrichtung hat den Vorzug, daß der Verbrennungsprozeß mit hohen Durchsätzen bei sehr konstanter Temperatur durchgeführt werden kann. Dies ist bei Verbrennungsprozessen von kohlenstoffhaltigen Materialien im Hinblick auf die $NO_x$-Bildung, aber auch auf das Verhalten der Asche, bei Ölschiefer beipielsweise auf deren Laugbarkeit oder deren hydraulisches Verhalten, bei Röstprozessen wegen des metallurgischen Ergebnisses von erheblicher Bedeutung.

Dabei läßt sich die Temperaturkonstanz praktisch ohne Änderung der im Wirbelschichtreaktor herrschenden Betriebszustände, also etwa ohne Veränderung der Suspensionsdichte u.a., allein durch geregelte Rückführung des gekühlten Feststoffes erreichen. Je nach Verbrennungsleistung und eingestellter Verbrennungstemperatur ist die Zirkulationsrate mehr oder minder hoch. Da bei einem vorgegebenen Brennstoff die Verbrennungstemperatur üblicherweise konstant gehalten wird, wird letztlich die Zirkulationsrate vom Lastzustand der Vorrichtung bestimmt. Die Verbrennungstemperaturen lassen sich beim erfindungsgemäßen Verfahren von sehr niedrigen Temperaturen, die nahe oberhalb der Zündgrenze liegen, bis zu sehr hohen Temperaturen, die durch Erweichung der Verbrennungsrückstände oder - bei Einsatz inerten Wirbelgutes - dieses Wirbelgutes begrenzt sind, beliebig einstellen. In der Praxis liegt der Temperaturbereich etwa zwischen 450°C und 1200°C.

Ein besonderer Vorteil der Erfindung liegt darin, daß selbst bei tieferen Verbrennungstemperaturen, die aus mancherlei Gründen zweckmäßig sind, die Einhaltung einer hohen Temperaturkonstanz und eine nahstöchiometrische Verbrennung möglich ist.

Da die Entnahme der bei der Verbrennung des brennbaren Bestandteiles gebildeten Wärme überwiegend im feststoffseitig nachgeschalteten Wirbelschichtkühler erfolgt, ist ein Wärmeübergang auf im Wirbelschichtreaktor befindliche Kühlregister, der eine hinreichend hohe Suspensionsdichte zur Voraussetzung hat, von untergeordneter Bedeutung. Somit ergibt sich als weiterer Vorteil, daß die Suspensionsdichte im Bereich des Wirbelschichtreaktors oberhalb der Sekundärgaszuführung niedrig gehalten werden kann, so daß der Druckverlust im gesamten Wirbelschichtreaktor vergleichsweise gering ist.

Statt dessen erfolgt der Wärmeentzug im Wirbelschichtkühler unter Bedingungen, die einen extrem hohen Wärmeübergang, etwa im Bereich von 350 bis 500 Watt/m$^2$ • °C, bewirken. Dies gelingt, weil der Wirbelschichtkühler unter für die Kühlung des Feststoffes optimalen Bedingungen, insbesondere hoher Suspensionsdichte, betrieben werden kann. Nachteilige Einflüsse durch Nachverbrennung, Überhitzung, Korrosion und anderem, die bei sonst üblicher Kühlung im Verbrennungsreaktor berücksichtigt werden müssen, sind ausgeschaltet.

Die Verbrennung im Wirbelschichtreaktor geschieht in zwei oder mehreren Stufen, da das für die Verbrennung erforderliche sauerstoffhaltige Gas in zwei oder mehr Teilströmen in unterschiedlichen Ebenen zugeführt wird. Dadurch wird eine "weiche" Verbrennung, d.h. eine solche ohne lokale Überhitzungserscheinungen, erhalten, die für die Entstehung nur geringer Stickoxid-Mengen verantwortlich ist. Die Abgase können daher ohne besondere Maßnahmen zur Verringerung des Stickoxidgehaltes in die Atmosphäre entlassen werden.

Infolge der weitgehenden Freiheit von Einbauten im unteren, unter der Sekundärgaszuführung liegenden Reaktorraum wird augenblicklich eine gute Verteilung des eingetragenen Materials erzielt. Die schnelle Durchmischung mit dem heißen Bettmaterial gewährleistet zudem eine gute Zündung.

Die im Wirbelschichtreaktor oberhalb der Sekundärgaszuführung herrschenden Gasgeschwindigkeiten liegen - bei Normaldruck - im Regelfall über 5 m/sec. und können bis zu 15 m/sec. betragen.

Das Verhältnis von Durchmesser zu Höhe des Wirbelschichtreaktors sollte derart gewählt werden, daß Gasverweilzeiten von 0,5 bis 8,0 sec., vorzugsweise 1 bis 4 sec., erhalten werden.

4

Als Fluidisierungsgas für den Wirbelschichtreaktor und Wirbelschichtkühler kann praktisch jedes beliebige, die Beschaffenheit des Abgases nicht beeinträchtigende Gas eingesetzt werden. Es sind z.B. Inertgase, wie rückgeführtes Rauchgas (Abgas), Stickstoff und Wasserdampf, geeignet. Im Hinblick auf die Intensivierung des Verbrennungsprozesses ist es jedoch vorteilhaft, wenn ein Teilstrom der zuzuführenden sauerstoffhaltigen Gase dem Wirbelschichtreaktor als Fluidisierungsgas zugeleitet wird.

Es ergeben sich mithin für die Durchführung des Verfahrens die Möglichkeiten:

1. Als Fluidisierungsgas für den Wirbelschichtreaktor und den Wirbelschichtkühler Inertgas zu verwenden. Dann ist es unerläßlich, das sauerstoffhaltige Verbrennungsgas als Sekundärgas in mindestens zwei übereinanderliegenden Ebenen einzutragen.

2. Als Fluidisierungsgas für den Wirbelschichtreaktor und den Wirbelschichtkühler bereits sauerstoffhaltiges Gas zu verwenden. Dann genügt der Eintrag von Sekundärgas in einer Ebene. Selbstverständlich kann auch bei dieser Ausführungsform noch eine Aufteilung des Sekundärgaseintrag in mehrere Ebenen erfolgen. Hierbei kann das Fluidisierungsgas des Wirbelschichtkühlers einen Teil oder das gesamte Sekundärgas stellen.

3. Sauerstoffhaltiges Gas als Fluidisierungsgas für den Wirbelschichtreaktor und Inertgas für den Wirbelschichtkühler zu verwenden. In diesem Fall ist Sekundärgas in mindestens einer Ebene erforderlich.

Innerhalb jeder Eintragsebene sind mehrere Zuführungsöffnungen für Sekundärgas vorteilhaft.

In bevorzugter Ausführung des erfindungsgemäßen Verfahrens wird das Sekundärgas in einer Höhe bis 30 %, bezogen auf die Gesamthöhe des Wirbelschichtreaktors, mindestens jedoch 1 m über der Einleitung des Fluidisierungsgases, zugeführt. Bei dieser Angabe ist - sofern das Sekundärgas in mehreren Ebenen zugeführt wird - auf die Höhenlage der obersten Sekundärgasleitung abgestellt. Diese Höhe schafft einerseits einen hinreichend großen Raum für die erste Verbrennungsstufe mit nahezu vollständiger Umsetzung zwischen brennbaren Bestandteilen und sauerstoffhaltigem Gas - sei es als Fluidisierungsgas oder Sekundärgas in einer tiefer liegenden Ebene zugeführt - und gibt andererseits die Möglichkeit, im oberen, über der Sekundärgaszuführung liegenden Reaktionsraum eine ausreichend große Ausbrandzone zu schaffen.

Im allgemeinen wird es zweckmäßig sein, die Wandung des Wirbelschichtreaktors mit Kühlflächen zu versehen. Kühlflächen im freien Reaktorraum, jedoch nur oberhalb der Sekundärgaszuführungen, sind ebenfalls möglich, jedoch von untergeordneter Bedeutung und können gegebenenfalls, z.B. bei niedrigen Heizwerten der Brennstoffe oder wenn erosive Aschen gebildet werden, ganz entfallen.

Um bei Verbrennung kohlenstoffhaltiger Materialien den Schwefelgehalt im Abgas gering zu halten, ist es vorteilhaft, den Verbrennungsprozeß in Gegenwart feinkörniger Entschwefelungsmittel, wie Kalk, Kalkstein, Dolomit und dgl., ablaufen zu lassen. Die Entschwefelungsmittel, die eine mittlere Teilchengröße von 30 bis 500 $\mu$m haben sollten, werden in einfachster Weise zusammen mit dem kohlenstoffhaltigen Material aufgegeben. Die mit dem erfindungsgemäßen Verfahren erzielte Temperaturkonstanz wirkt sich auch bei der Entschwefelung insofern positiv aus, als das Entschwefelungsmittel seine Aktivität und damit sein Aufnahmevermögen gegenüber Schwefel behält. Die hohe Feinkörnigkeit des Entschwefelungsmittels ergänzt diesen Vorteil, da das Verhältnis von Oberfläche zu Volumen für die im wesentlichen durch die Diffusionsgeschwindigkeit bestimmte Bindungsgeschwindigkeit des Schwefels besonders günstig ist.

Leistungssteigerungen bei vorgegebenen Reaktorabmessungen lassen sich erzielen, wenn der Verbrennungsprozeß anstatt mit Luft mit mit Sauerstoff angereicherter Luft und/oder unter Druck, vorzugsweise bis 20 bar, durchgeführt wird.

Der Eintrag des Materials in den Wirbelschichtreaktor erfolgt auf übliche Weise, am zweckmäßigsten über eine oder mehrere Lanzen, z.B. durch pneumatisches Einblasen. Infolge der guten Quervermischung reicht eine vergleichsweise geringe Zahl an Eintragslanzen.

Das erfindungsgemäße Verfahren eignet sich insbesondere für die Verbrennung von kohlenstoffhaltigen Materialien, d.h. Kohle aller Art, von Kohlewaschbergen, verschiedenen industriellen Abfällen, wie Räumaschen, Ölschiefer sowie Heizöl, Holzabfällen, städtischen Abfällen und Mischungen hiervon. Bei Verwendung von Heizöl oder gasförmigem Brennstoff als kohlenstoffhaltigem Material ist ein Hilfsbett, z.B. aus feinkörnigem Sand, Kalk, Kalkstein oder Dolomit oder anderen mineralischen Stoffen, erforderlich. Weitere Anwendungsbereiche liegen in der Abröstung verschiedener sulfidischer Erze oder Erzkonzentrate.

Die Erfindung wird anhand der Figuren und der Beispiele beispielsweise und näher erläutert.

Es veranschaulichen, jeweils in schematischer Weise,

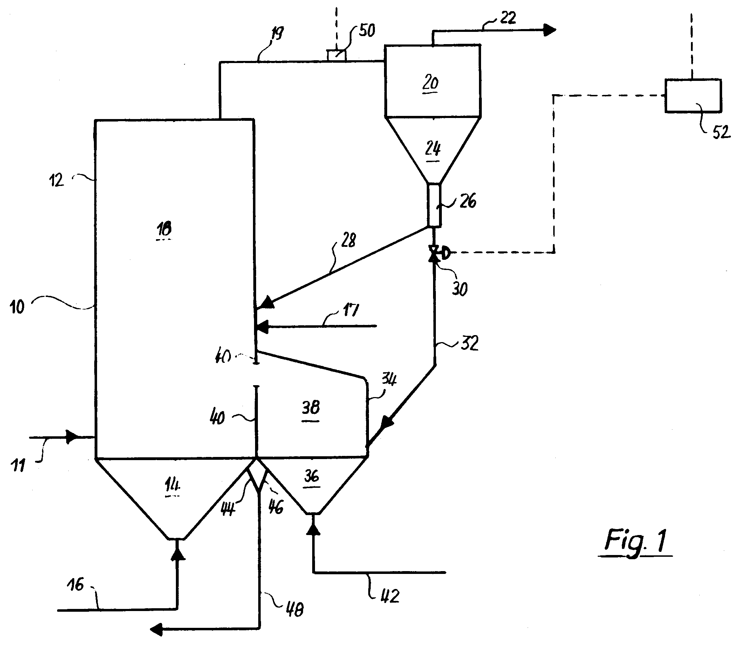

Fig.1 die erfindungsgemäße Vorrichtung,

Fig.2 einen Ausschnitt der Vorrichtung mit vergrößerter Wiedergabe des Bereichs der gemeinsamen Trennwand,

Fig.3 eine Seitenansicht längs der Linie 3-3 von Fig.2,

Fig.4 verschiedene Anordnungen des integrierten Wirbelschichtkühlers und

Fig.5 die Anordnung zweier Feststoffabscheider sowie der zugehörigen Wirbelschichtkühler.

Der Wirbelschichtreaktor (10) besitzt vorzugsweise rechteckigen Querschnitt und ist aus einem oberen Abschnitt (12) und einem unteren Abschnitt (14) gebildet. Der kohlenstoffhaltige Brennstoff, beispielsweise Kohle, wird über Leitung (11) aufgegeben. Das Fluidisierungsgas wird über die Leitung (16) zugeführt und auf übliche Art und Weise durch einen Rost oder eine Düsenanordnung in den Reaktor eingetragen. Der Druck des zugeführten Fluidisierungsgases ist mindestens so groß, daß er zur Überwindung des Druckverlustes im Wirbelschichtreaktor und in den nachgeschalteten Aggregaten ausreicht. Das sauerstoffhaltige Sekundärgas wird über Leitung (17) zugeführt. Während des Verbrennungsprozesses erfährt das kohlenstoffhaltige Material auch eine physikalische Veränderung, so daß die resultierenden Feststoffpartikelchen kleiner sein können als das ursprünglich aufgegebene Material. Im oberen Reaktorraum (18) oberhalb der Sekundärgasführung (17) wird eine Suspensionsdichte eingestellt, die im Bereich von 10 bis 100 kg/m$^3$, vorzugsweise jedoch im Bereich von 15 bis 50 kg/m$^3$, liegt. Art und Weise der Einstellung dieser Suspensionsdichte sind in der DE-AS 25 39 546 bzw. DE-OS 26 24 302 (entsprechend US-PS s 4 165 717 und 4 111 158) beschrieben.

Das Abgas wird mit den festen Partikeln am Kopf des Reaktors (10) über Leitung (19) in einen Abscheidezyklon (20) ausgetragen, in dem die Trennung von Feststoff und Gas erfolgt. Anstelle eines Abscheidezyklons kann auch ein System mehrerer Abscheidezyklone eingesetzt werden. Im Abscheidezyklon gelangen die Feststoffe in den unteren konischen Teil (24), von dem sie mittels einer Druckabschlußvorrichtung (26), die pneumatisch oder mechanisch arbeiten kann, ausgetragen werden. Die Abgase verlassen den Abscheidezyklon (20) über Leitung (22) und werden über einen konvektiven Dampferzeuger, der ggf. einen Economizer sowie zusätzlich Verdampfer und Zwischenüberhitzerheizflächen besitzen kann, geführt. Das Abgas wird dann in die Gasreinigungsanlage geführt, die beispielsweise aus einem elektrostatischen Abscheider besteht. Die Abgase können auch über einen Luftvorwärmer geleitet werden, um mit deren fühlbarer Wärme Verbrennungsluft vorzuwärmen.

Mit Hilfe der Druckabschlußvorrichtung (26) wird der im Abscheidezyklon (20) gesammelte Feststoff in den Wirbelschichtreaktor zurückgeführt. Die hierzu verwendete Rückführleitung (28) ist so ausgelegt, daß sie ggf. den gesamten abgeschiedenen Feststoff aufnehmen kann.

Ein Feststoffteilstrom des im Abscheidezyklon (20) abgeschiedenen Feststoffes gelangt mit Hilfe eines Ventils (30) über Leitung (32) zu einem Wirbelschichtkühler (34), der mit dem Wirbelschichtreaktor (10) eine bauliche Einheit bildet. Der Wirbelschichtkühler (34) ist mit einem unteren Abschnitt (36) und einer oberen Kammer (38) versehen. Diese Kammer ist dafür bestimmt, den aus der Leitung (32) herantransportierten, vorzugsweise am unteren Bereich der Kammer (38) zugeführten Feststoff aufzunehmen. Wirbelschichtreaktor (10) und Wirbelschichtkühler (34) besitzen eine gemeinsame Trennwand (40).

Fluidisierungsgas wird in den unteren Bereich (36) des Wirbelschichtkühlers in an sich bekannter Weise durch einen Rost bzw. düsenähnlichen Verteiler mittels Leitung (42) eingeführt. Der Wirbelschichtreaktor (10) und der Wirbelschichtkühler (34) können mit Entnahmeeinrichtungen (44) und (46) ausgestattet sein, um Feststoff mittels der Leitung (48) abziehen zu können.

Der Anteil an Feststoffen der dem Wirbelschichtkühler (34) mittels der Leitung (32) zugeführt wird, kann durch verschiedenartige Prozeßparameter bestimmt sein. In bevorzugter Ausgestaltung der Erfindung wird die Temperatur des Abgases, das aus dem Wirbelschichtreaktor (10) austritt bzw. des Abgases, das aus dem Abscheidezyklon (20) austritt, mit einem Temperaturfühler (50) überprüft. Das erhaltene Signal wird dann einem Kontrollgerät (52) zugeleitet, das den gemessenen Wert mit dem Sollwert vergleicht. Sofern der Meßwert vom Sollwert abweicht, wird das Ventil (30) betätigt, um dadurch den Feststofffluß zum Wirbelschichtkühler (34) zu erhöhen oder zu erniedrigen.

Eine andere Form der Regelung besteht darin, die Temperatur des im Wirbelschichtkühler (34) aufgeheizten Mediums zur Regelung heranzuziehen.

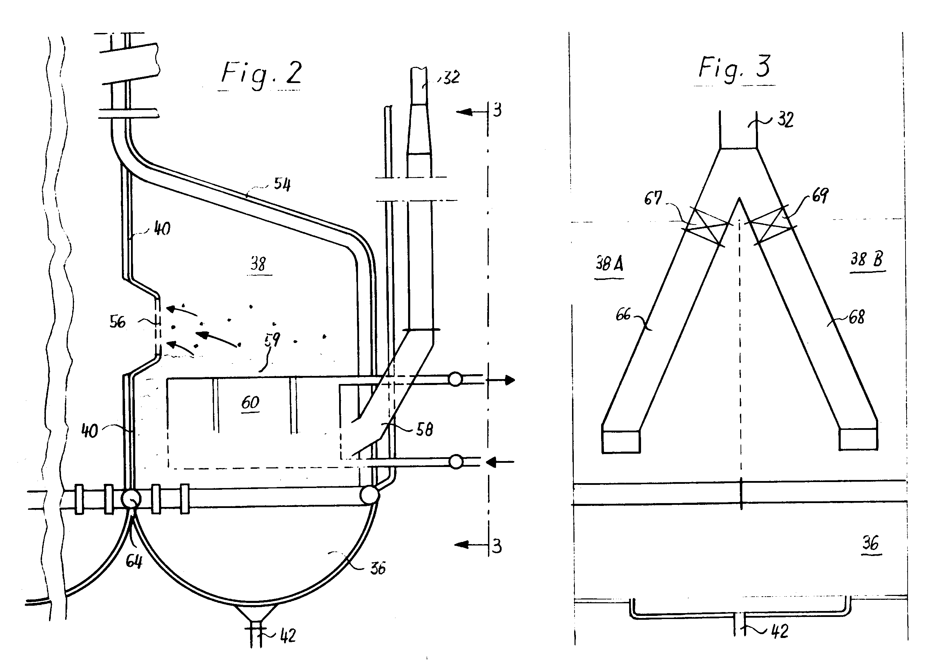

In der Ausgestaltung der Erfindung gemäß Fig.2 wird der Wirbelschichtkühler (34) mindestens zum Teil von dem Wandabschnitt (54) des Wirbelschichtreaktors (10) eingeschlossen. Die Trennwand (40) trennt die Kammer (38) des Wirbelschichtkühlers (34) vom Wirbelschichtreaktor (10) an einer Stelle, an der die höchste Suspensionsdichte herrscht. Die Trennwand (40) ist mit mindestens einer Öffnung (56) versehen. Vorzugsweise werden jedoch mehrere Öffnungen in der Trennwand (40) angeordnet.

Bei der Ausgestaltung gemäß Fig.2 mündet die Leitung (32) in eine weitere Leitung (58), die in den unteren Bereich der Kammer (38) führt. Das im Wirbelschichtkühler (34) befindliche Wirbelbett ist mit (59) bezeichnet. Es besitzt die für klassische Wirbelschichten typische obere definierte Grenzfläche.

Weiterhin befinden sich im Wirbelschichtkühler (34) Wärmeaustauscherflächen (60), die in die Wirbelschicht (59) eintauchen. Die obere Bettbegrenzung der Wirbelschicht (59) liegt praktisch auf der Höhe der des unteren Öffnungsbereiches (56). Die Druckverhältnisse hinsichtlich der Wirbelgase im Wirbelschichtkühler (34) und im Wirbelschichtreaktor sind derart aufeinander abgestimmt, daß ein einwandfreier Materialfluß vom Wirbelschichtkühler (34) in den Wirbelschichtreaktor (10) sichergestellt ist.

Die Trennwand (40) ist aus einer Rohrwand gebildet, die mit einer Sammelleitung (64) verbunden ist.

Wie in Fig.3 dargestellt, kann die Leitung (32) auf zwei Leitungen (66) und (68) und die Kammer (38) des Wirbelschichtkühlers (34) auf zwei Unterkammern (38A) und (38B) aufgeteilt sein. Jede der Leitungen (66) und (68) besitzt ein Ventil (61) bzw. (69), welche unabhängig voneinander geregelt werden können. Jede Unterkammer besitzt Wärmetauscherflächen, die getrennt mit Kühlmittel beaufschlagt werden. Daher ist es möglich, die Wärmeleistungen in den einzelnen Unterkammern unabhängig voneinander zu regeln. Beispielsweise kann die Unterkammer (38A) zur Verdampfung und die Unterkammer (38B) für die Überhitzung des Dampfes eingesetzt werden, und demzufolge der heiße Feststoff den Erfordernissen entsprechend aufgeteilt werden. Auch die Wände der einzelnen Kammern des Wirbelschichtkühlers können aus gekühlten Rohrwänden gebildet werden.

In ähnlicher Weise wie vorstehend beschrieben können auch Kammern oder Unterkammern zur Zwischenüberhitzung von Dampf geschaltet werden.

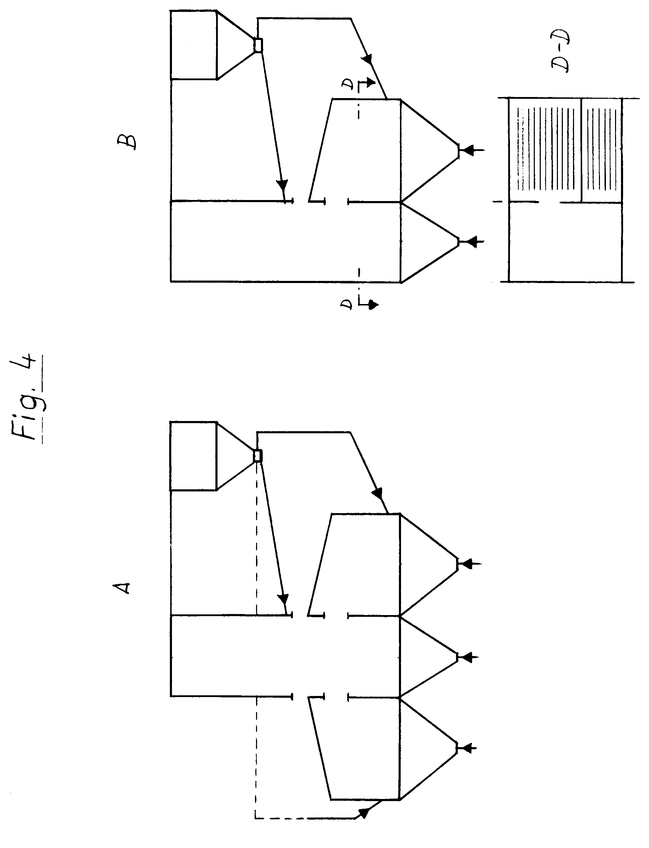

Fig.4 zeigt eine Anzahl von zusätzlichen Ausgestaltungen der vorliegenden Erfindung. Gemäß der Darstellung A sind zwei Wirbelschichtkühler vorgesehen, wobei sich die einzelnen Einheiten gegenüberliegen. Darstellung B mit einem Schnitt längs der Linie D-D zeigt eine Anordnung, bei der der Wirbelschichtkühler (34) in einzelnen, hintereinander geschaltete Unterkammern aufgeteilt ist.

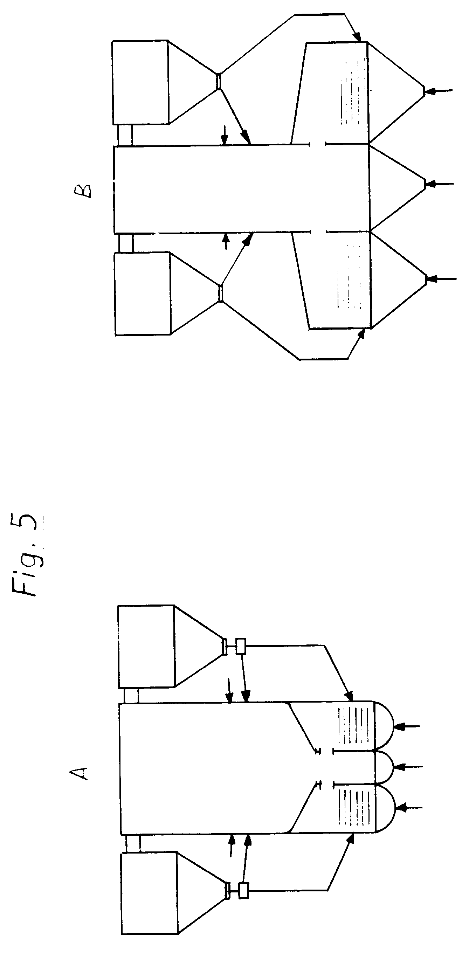

Fig.5A und 5B veranschaulichen Anordnungen, wobei mehrere Feststoffabscheider verwendet werden, um dadurch eine zusätzliche unabhängige Kontrolle der Wärmeleistungen in den Wirbelschichteinheiten zu bewerkstelligen. Fig.5A zeigt zudem eine Ausführungsform, bei der die Wirbelschichteinheiten derart in den Wirbelschichtreaktor integriert sind, daß sie zu einer baulichen Einheit mit durchgehend etwa gleichem Querschnitt verschmelzen.

BEISPIEL 1

Petrolkoks in einer Menge von 18 634 kg/h mit einem Kohlenstoffgehalt von 80,96 Gew.% und einem Schwefelgehalt von 6,07 Gew.% sowie mit einem Heizwert von 31,2 MJ/kg wird dem Wirbelschichtreaktor (10), dessen Fläche 22,3 m$^2$ und dessen Höhe 24,4 m beträgt, aufgegeben. Der Petrolkoks hat einen maximalen Partikeldurchmesser von 12,7 mm. Über Leitung (16) werden 96 960 kg/h Luft, die auf eine Temperatur von 206°C vorgewärmt ist und einen Druck von 1 830 mm Wassersäule besitzt, durch den Rost zugeführt. Die über Leitung (17) eingetragene Sekundärluftmenge beträgt 117 368 kg/h. Sie besitzt eine Temperatur von 206°C und einen Druck von 890 mm Wassersäule. Kalkstein in einer Menge von 4 831 kg/h wird dem Reaktor zur Bindung des Schwefels zugeführt.

Im Wirbelschichtreaktor (10) herrscht oberhalb der Sekundärgaszuführung (17) eine mittlere Suspensionsdichte von 40 kg/m$^3$. Es werden stündlich 1,31 x 10$^6$ kg Feststoffe aus dem Reaktor über Leitung (19) ausgetragen und in den Zyklon (20) eingeführt. Bis auf einen Rest von 9 300 kg/h wird die vorgenannte Feststoffmenge im Zyklon abgeschieden. Der Feststoff besitzt eine Temperatur von 871°C.

Der Wirbelschichtkühler erhält über Leitung (32) 0,5 x 10$^6$ kg/h heiße Feststoffe aus dem Zyklon (20). Außerdem wird er mit Fluidisierungsluft in einer Menge von 17 323 kg/h, die eine Temperatur von 71°C und einen Druck von 4 320 mm Wassersäule aufweist, beaufschlagt. Etwa 489 kg/h von überschüssigem Feststoff mit einer Temperatur von 649°C wird aus dem Wirbelschichtkühler (34) ausgeschleust und zu einem Aschesilo transportiert. Der übrige Feststoff gelangt durch die in der Trennwand (40) von Wirbelschichtreaktor und Wirbelschichtkühler befindlichen Öffnungen (56) in den Wirbelschichtreaktor (10) zurück. Die Öffnungen befinden sich in einer Höhe von 2,13 m - bezogen auf den Rost des Wirbelschichtreaktors (10) - und besitzen eine Gesamtfläche von etwa 0,74 m$^2$. Grobkorn kann über Leitung (44) ausgeschleust werden.

Im Wirbelschichtkühler (34) wird die Fluidisierungsluft auf 649°C erhitzt und gelangt zusammen mit den Feststoffen durch die Trennwand (40) in den Wirbelschichtreaktor (10). Als Kühlmedium wird Sattdampf durch die Kühlfläche (60) des Wirbelschichtkühlers (34) in einer Menge von 204 120 kg/h geführt und mit 540°C ausgetragen. Die Temperatur des Wirbelschichtreaktors beträgt 871°C.

Die im Wirbelschichtkühler (34) insgesamt übertragene Wärmemenge beträgt 115,9 x 10$^6$ kJ/h. Es resultiert Dampf in einer Menge von 204 000 kg/h von 540°C und einem Druck von 134 bar.

BEISPIEL 2

Als fester Brennstoff wird Lignit in einer Menge von 109 400 kg/h mit einem Kohlenstoffgehalt von 38,6 Gew.% und einem Schwefelgehalt von 0,9 Gew-% eingesetzt. Der Heizwert des festen Brennstoffes beträgt 15,64 MJ/kg. Der Wirbelschichtreaktor hat eine Querschnittsfläche von 83,6 m$^2$ und eine Höhe von 30,5 m. Der maximale Teilchendurchmesser des Brennstoffs beträgt 9,5 mm.

Dem Wirbelschichtreaktor (10) wird über Leitung (16) Fluidisierungsluft in einer Menge von 267 442 kg/h, die auf eine Temperatur von 242°C vorgewärmt ist und einen Druck von 2 235 mm Wassersäule besitzt, zugeleitet. Die Sekundärluft, die ebenfalls eine Temperatur von 242°C aufweist, jedoch unter einem Druck von 1 219 mm Wassersäule steht, gelangt in einer Menge von 353 422 kg/h über Leitung (17) oberhalb der Eintragsvorrichtung (11) für den Brennstoff in den Wirbelschichtreaktor (10). Außerdem werden 2 388 kg/h Kalkstein zur Bindung des Schwefels in den Wirbelschichtreaktor 10) eingetragen.

Das Abgas des Wirbelschichtreaktors 10) besitzt eine Temperatur von 877°C.

Bei einer Zirkulationsrate von 2,63 x 10$^6$ kg/h herrscht im Wirbelschichtreaktor (10) oberhalb der Sekundärgaszuführung (17) eine mittlere Suspensionsdichte von 45 kg/m$^3$.

2,63 x 10$^6$ kg/h werden in den Zyklon (20) eingetragen. Bis auf 27 216 kg werden sämtliche Feststoffe hierin abgeschieden. Die Feststoffe besitzen eine Temperatur von 849°C. Der Wirbelschichtkühler (34) erhält über Leitung (32) 1,36 x 10$^6$ kg/h Feststoffe aus dem Zyklon (20). Außerdem wird er mit Fluidisierungsluft von 71°C und 4 700 mm Wassersäule in einer Menge von 29 462 kg/h beaufschlagt. 1 361 kg/h Überschußfeststoff einer Temperatur von 635°C werden aus dem Wirbelschichtkühler (34) abgezogen, gekühlt und zu einem Aschesilo transportiert. Der verbleibende Feststoff wird durch die Öffnungen (56) in der Trennwand (40) in den Wirbelschichtreaktor (10) geführt. Der Wirbelschichtkühler (34) besteht aus zwei Kammern, nämlich den Kammern (38A) und (38B), von denen eine Überhitzerflächen und die andere Zwischenüberhitzerflächen aufweist. Wände und Zwischenwände des Wirbelschichtkühlers (34) bestehen aus wassergekühlten Rohrwänden. Die Verdampfungsleistung innerhalb der Rohrwände beträgt 47,4 x 10$^6$ kJ/h. Die Überhitzungsleistung liegt bei 137 x 10$^6$ kJ/h, die Zwischenüberhitzungsleistung bei 211 x 10$^6$ kJ/h. Die für die vorgenannten Leistungen verantwortlichen Feststoffeinträge liegen bei 0,454 x 10$^6$ kg/h hinsichtlich der der Überhitzung dienenden Wirbelschichtkammer und bei 0,91 x 10$^6$ kg/h hinsichtlich der Zwischenüberhitzereinheit. Beide Feststoffströme werden in den Wirbelschichtreaktor (10) mit einer Temperatur von 635°C zurückgeführt.

Als Ergebnis des Wärmeaustausches im Wirbelschichtkühler (34) werden 500 000 kg/h überhitzter Dampf von 541°C und 142 bar sowie 448 000 kg/h zwischenüberhitzter Dampf von 541°C und 28,9 bar erzeugt.

Der Wirbelschichtkühler (34) besitzt die den Feststoff in den Wirbelschichtreaktor (10) führenden Öffnungen in einer Höhe von 2,13 m über dem Reaktorrost. Deren Gesamtöffnungen haben eine Fläche von 1,58 m$^2$.

Im Wirbelschichtkühler (34) wird die Fluidisierungsluft auf 635°C aufgeheizt und gemeinsam mit dem Feststoff durch die perforiere Wand (40) in den Wirbelschichtreaktor (10) eingetragen. Der gesamte in den Kühlkammern des Wirbelschichtkühlers (34) vollzogene Wärmeübergang von Feststoff auf die Kühlmedien Wasser und Dampf beträgt 395 x 10$^6$ kJ/h.

Um die Energieerzeugungsanlage an eine Teillast anzupassen, werden die Brennstoffzufuhr sowie die Verbrennungsluftzufuhr proportional verringert. Auch wird die Zirkulationsrate des Feststoffes reduziert und mit Hilfe der Regelventile derartig aufgeteilt, daß die neuen Anforderungen an den Dampf erfüllt werden.

Bei einer Teillast von beispielsweise 75 % der Vollast wird die Frischdampferzeugung auf 374 000 kg/h und die Zwischenüberhitzung von Dampf auf 336 000 kg/h verringert.

Demzufolge beträgt der Brennstoffeintrag nur noch 82 100 kg/h. Die Mengen an Fluidisierungsluft und Sekundärluft werden proportional verringert, um den Luftüberschuß auf dem ursprünglichen Wert zu halten, wohingegen der Luftfluß für die Fluidisierung des Wirbelschichtkühlers konstant bleibt. Infolge der verringerten Gasmengen im Wirbelschichtreaktor (10) reduziert sich die Zirkulationsrate des Feststoffes auf 1,8 x 10$^6$ kg/h. 0,68 x 10$^6$ kg/h des zirkulierten Feststoffes werden über die Kammer zur Zwischenüberhitzung geführt, um dort die Temperatur des Dampfes auf 541°C zu halten. Der Feststofffluß wird dabei mit Hilfe des Ventils (67) als Funktion der Zwischenüberhitzungstemperatur gesteuert.

Etwa 0,34 x 10$^6$ kg/h des zirkulierten Feststoffes werden in die der Überhitzung dienenden Kühlkammer des Wirbelschichtkühlers (34) geführt, um dadurch letztlich die Verbrennungstemperatur im Wirbelschichtreaktor (10) konstant zu halten. Die endgültige Kontrolle der Temperatur des überhitzten Dampfes wird durch Einspritzen von Wasser geregelt.

**Patentansprüche**

1. Verbrennungsvorrichtung mit einer aus Wirbelschichtreaktor (10), Feststoffabscheider (20) und Rückführleitung (28) gebildeten zirkulierenden Wirbelschicht, die neben der Fluidisierungsgaszuführung (16) wenigstens eine Zuführung für sauerstoffhaltiges Sekundärgas (17) aufweist, ferner mit mindestens einem mit Kühlelementen (60) ausgestatteten Wirbelschichtkühler (34), der über eine Leitung (32) mit dem Feststoffabscheider (20) oder der Rückführleitung (28) in Verbindung steht sowie mit einer Feststoffrückführung vom wirbelschichtkühler (34) in den Wirbelschichtreaktor (10), dadurch gekennzeichnet, daß der Wirbelschichtkühler (34) oberhalb der Fluidisierungsgaszuführung (16) des Wirbelschichtreaktors (10) angeordnet ist, mit dem Wirbelschichtreaktor (10) eine gemeinsame Wand (40) besitzt, die gekühlt ist und mindestens die Durchtrittsöffnung (56) für gekühlten Feststoff in den Wirbelschichtreaktor (10) aufweist.

2. Vorrichtung nach Anspruch 1, dadurch gekennzeichnet, daß der Wirbelschichtkühler (34) zwischen Fluidisierungsgaszuführung (16) und Sekundärgaszuführung (17) des Wirbelschichtreaktors (10) angeordnet ist.

3. Vorrichtung nach Anspruch 1 oder 2, dadurch gekennzeichnet, daß der Wirbelschichtkühler (34) aus mehreren mit Kühlflächen (60) ausgestatteten Einheiten besteht, die jeweils eine gemeinsame Wand (40) mit dem Wirbelschichtreaktor (10) und eine separate Feststoffversorgungsleitung (32) aufweisen.

4. Vorrichtung nach Anspruch 3, dadurch gekennzeichnet, daß die einzelnen Einheiten mit Kühlflächen (60), die als Verdampfer-, Überhitzer- und Zwischenüberhitzerflächen konzipiert sind, ausgestattet sind.

5. Vorrichtung nach Anspruch 3 oder 4, dadurch gekennzeichnet, daß einzelne Einheiten mit Eintragseinrichtungen für Brennstoff oder Entschwefelungsmittel ausgestattet sind.

## Claims

1. A combustion device with a circulating fluidised bed system consisting of a fluidised bed reactor (10), solids separator (20) and return line (28), which system in addition to the fluidising gas supply means (16) has at least one supply means for oxygen-containing secondary gas (17), furthermore with at least one fluidised bed cooler (34) equipped with cooling elements (60), which cooler communicates with the solids separator (20) or the return line (28) via a line (32) and also with a solids return means from the fluidised bed cooler (34) into the fluidised bed reactor (10), characterised in that the fluidised bed cooler (34) is located above the fluidising gas supply means (16) of the fluidised bed reactor (10), has a common wall (40) with the fluidised bed reactor (10), which wall is cooled and has at least one opening (56) for cooled solids to pass into the fluidised bed reactor (10).

2. A device according to Claim 1, characterised in that the fluidised bed cooler (34) is located between the fluidising gas supply means (16) and the secondary gas supply means (17) of the fluidised bed reactor (10).

3. A device according to Claim 1 or 2, characterised in that the fluidised bed cooler (34) consists of a plurality of units equipped with cooling surfaces (60), which each have a common wall (40) with the fluidised bed reactor (10) and a separate solids supply line (32).

4. A device according to Claim 3, characterised in that the individual units are equipped with cooling surfaces (60) which are designed as evaporator, superheater and intermediate superheater surfaces.

5. A device according to Claim 3 or 4, characterised in that individual units are equipped with charging devices for fuel or desulphurising agents.

## Revendications

1. Installation de combustion comprenant un lit fluidisé circulant formé d'un réacteur à lit fluidisé (10), d'un séparateur de matière solide (20) et d'un conduit de recyclage (28), qui comporte, outre l'entrée (16) pour du gaz de fluidisation, au moins une entrée pour du gaz secondaire (17) contenant de l'oxygène et comprenant en outre au moins un dispositif de refroidissement (34) à lit fluidisé, muni d'éléments de refroidissement (60) et communiquant par un conduit (32) avec le séparateur (20) de matière solide ou avec le conduit de recyclage (28), ainsi qu'un conduit de recyclage de matière solide du dispositif de refroidissement (34) à lit fluidisé au réacteur (10) à lit fluidisé, caractérisée en ce que le dispositif de refroidissement (34) à lit fluidisé est disposé au-dessus de l'entrée (16) pour le gaz de fluidisation du

9

réacteur (10) à lit fluidisé, possède avec le réacteur (10) à lit fluidisé une paroi (40) commune qui est refroidie et qui comporte au moins un orifice de passage (56) de la matière solide refroidie dans le réacteur (10) à lit fluidisé.

2. Installation suivant la revendication 1, caractérisée en ce que le dispositif de refroidissement (34) à lit fluidisé est disposé entre l'entrée (16) pour le gaz de fluidisation et l'entrée (17) pour le gaz secondaire du réacteur (10) à lit fluidisé.

3. Installation suivant la revendication 1 ou 2, caractérisée en ce que le dispositif de refroidissement (34) à lit fluidisé est constitué de plusieurs unités munies de surfaces (60) de refroidissement qui comportent chacune une paroi (40) commune avec le réacteur (10) à lit fluidisé et un conduit (32) distinct d'alimentation en matière solide.

4. Installation suivant la revendication 3, caractérisée en ce que les unités sont munies de surfaces (60) de refroidissement conçues en surfaces d'évaporateurs, de surchauffeurs et de resurchauffeurs.

5. Installation suivant la revendication 3 ou 4, caractérisée en ce que les unités sont munies de dispositifs de chargement de combustible ou d'agent de désulfuration.

*Fig. 1*

Fig. 2

Fig. 3

EP 0 206 066 B1

Fig. 4

A

B

D-D

EP 0 206 066 B1

Fig. 5